# EUROPÄISCHE PATENTSCHRIFT

(11) **EP 0 868 598 B1**
(45) Veröffentlichungstag und Bekanntmachung des Hinweises auf die Patenterteilung: **27.10.1999**
(21) Anmeldenummer: 96946184.7
(22) Anmeldetag: 10.12.1996
(51) Int. Cl.: F02B 27/02

(54) **LUFTANSAUGVORRICHTUNG MIT VARIABLER SAUGROHRLÄNGE FÜR EINE BRENNKRAFTMASCHINE**
AIR INTAKE DEVICE WITH VARIABLE INTAKE PIPE LENGTH FOR AN INTERNAL COMBUSTION ENGINE
SYSTEME D'ASPIRATION D'AIR A LONGUEUR VARIABLE DU TUYAU D'ASPIRATION POUR MOTEUR A COMBUSTION INTERNE

(30) Priorität: 21.12.1995 DE 19548055
(43) Veröffentlichungstag der Anmeldung: 07.10.1998
(73) Patentinhaber: SIEMENS AKTIENGESELLSCHAFT, 80333 München (DE)
(72) Erfinder: ESPE, Carsten, D-51597 Morsbach (DE); FISCHER, Peter, D-93049 Regensburg (DE); LUTZ, Michael, D-93095 Hagelstadt (DE); SCHMID, Stefan, D-85354 Freising (DE)
(86) Internationale Anmeldenummer: DE9602385
(87) Internationale Veröffentlichungsnummer: WO9723714

(56) Entgegenhaltungen:
- EP-A- 0 177 794
- EP-A- 0 201 180
- WO-A-94/05901
- WO-A-96/02743
- DE-A- 3 820 643

## Beschreibung

Die Erfindung betrifft eine Luftansaugvorrichtung nach dem Oberbegriff von Patentanspruch 1. Demnach richtet sich die Erfindung auf variable Saugrohre, d.h zwischen zwei Längen einstellbare Saugrohre, einer Brennkraftmaschine, wobei die Länge der Saugrohre jeweils an den Betriebszustand der Brennkraftmaschine angepaßt wird. Dadurch kann die jeweils maximale Motorleistung sowohl bei niedrigen als auch bei hohen Drehzahlen gesteigert werden.

In einer älteren Anmeldung ist eine Luftansaugvorrichtung (WO 96/02743, Unser Zeichen GR 94 P 1469 P) beschrieben, die einen Sammler aufweist, der zylinderförmig ausgebildet ist und an dessen Umfang Saugrohre angeordnet sind. Die Saugrohre sind an einem Ende über Einlässe mit dem Sammler verbunden. Sie können aber auch direkt über Einmündungsöffnungen mit dem Sammler kommunizieren, wobei dann die effektive Länge der Saugrohre reduziert ist. Mit der effektiven Länge der Saugrohre wird die Länge des Saugrohrbereichs bezeichnet, in dem der Großteil des Luftmassenstroms strömt.

Eine Schaltvorrichtung, die zylindersektorförmig ausgebildet ist, ist schwenkbar in dem Sammler gelagert. In einer ersten Drehlage verschließt sie die Einmündungsöffnungen. Dazu liegt sie flächig auf einem umlaufenden Ansatz der Einmündungsöffnungen auf. Die effektive Saugrohrlänge entspricht in der ersten Drehlage nur dann der Länge des Saugrohrs von dem Eintritt bis zu dem Zylinder der Brennkraftmaschine, wenn die Einmündungsöffnung dicht verschlossen ist. Somit ist ein hoher Aufwand nötig um die Toleranzen bei der Schaltvorrichtung und bei dem Sammler so gering zu halten, daß eine dichtende Anlage der Schaltvorrichtung an dem umlaufenden Ansatz gewährleistet ist.

Aus der EP 0 177 794 A1 ist eine Luftansaugvorrichtung für Mehrzylinderbrennkraftmaschinen bekannt. Die Luftansaugvorrichtung hat Saugrohre, die sich über einen Bogen von mehr als 90° erstrecken. In dem von den Saugrohren umschlossenen Raum sind ein Sammelsaugrohr mit einem Luftmassenmesser und ein Sammler angeordnet. Das Sammelsaugrohr und der Sammler kommerzieren über einen Drosselklappenstutzen mit einer Drosselklappe. Es sind jeweils paarweise kurze und lange Einzelsaugrohre vorgesehen, denen jeweils ein Drehschieber zugeordnet ist, mit dem das jeweilige Einzelsaugrohr verschließbar ist.

Die Aufgabe der Erfindung ist es, eine Luftansaugvorrichtung mit variablen Saugrohren derart auszubilden, daß die Einmündungsöffnungen in einfacher Weise dicht verschließbar sind.

Die Aufgabe wird erfindungsgemäß durch die Merkmale von Patentanspruch 1 gelöst. Vorteilhafte Ausgestaltungen der Erfindung sind in den Unteransprüchen gekennzeichnet.

Ausführungsbeispiele der Erfindung werden anhand der schematischen Zeichnung näher erläutert. Sie zeigen:
- Figur 1: eine erfindungsgemäße Luftansaugvorrichtung,
- Figur 2: eine Schaltvorrichtung der Luftansaugvorrichtung nach Figur 1,
- Figur 3: eine Explosionsdarstellung einer Erhebung der Schaltvorrichtung gemäß Figur 2, und
- Figur 4,5: einen radialen Schnitt durch die Luftansaugvorrichtung gemäß Figur 1 mit zwei verschiedenen Stellungen der Schaltvorrichtung.

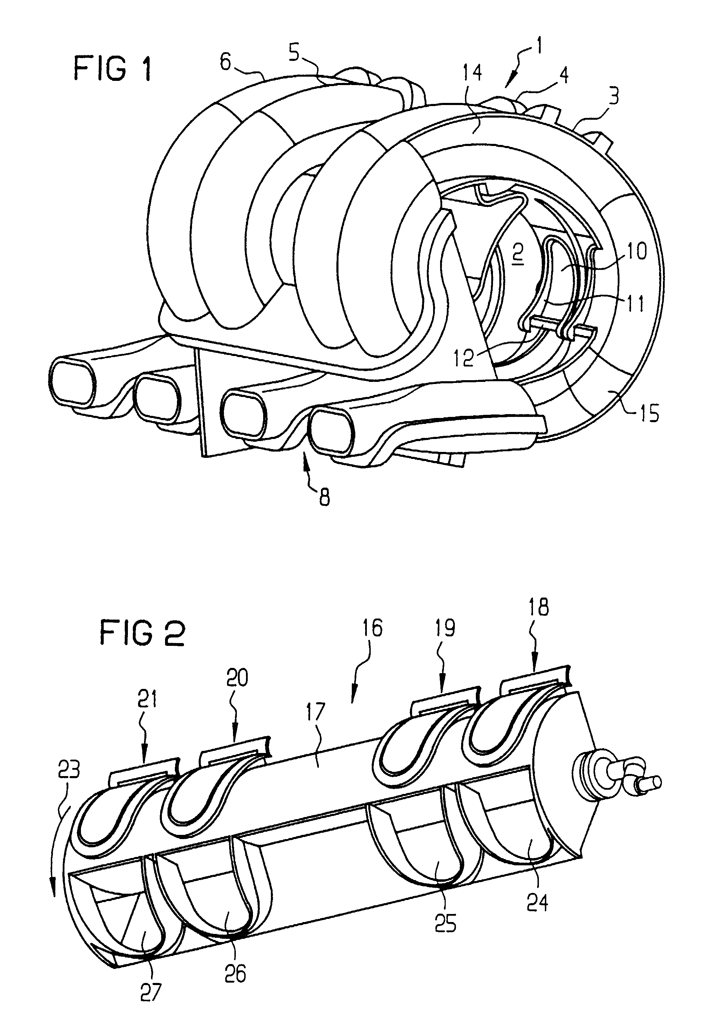

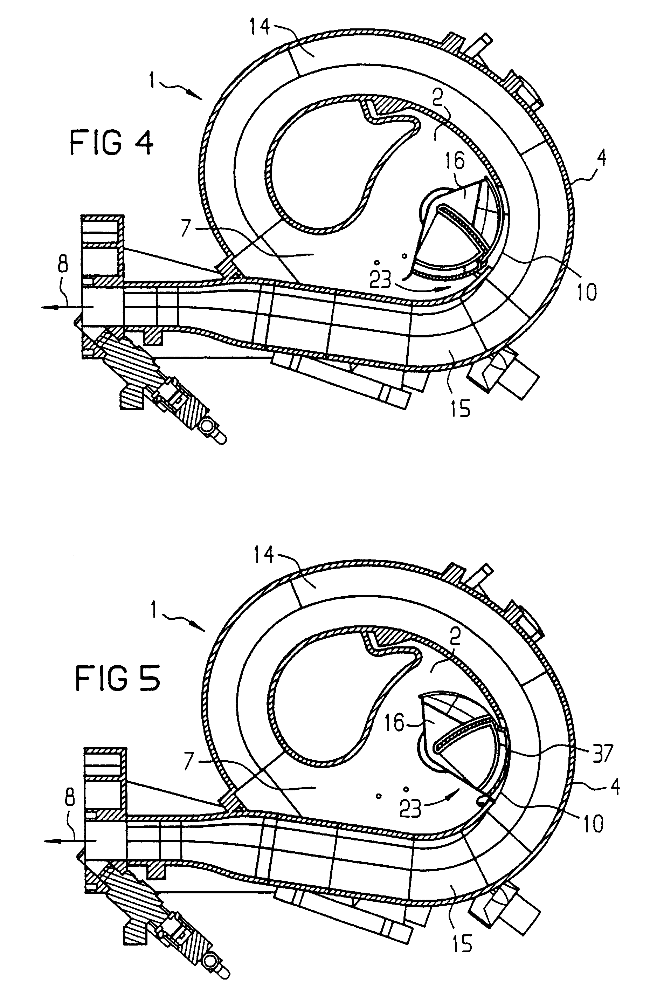

Eine Luftansaugvorrichtung 1 (Figur 1) weist einen zylinderförmigen Sammler 2 auf, der über einen nicht dargestellten Drosselklappen-Ansaugkanal mit der Außenluft in Verbindung steht. Vier Saugrohre 3,4,5,6 erstrecken sich jeweils von einem Einlaß 7( vgl. Figur 4,5) entlang des Umfangs des Sammlers 2 bis zu einem Einlaßkanal 8, der in den zugehörigen Zylinder einer hier nicht dargestellten Brennkraftmaschine mündet.

Der Sammler 2 ist mit Einmündungsöffnungen zu den Saugrohren 3,4,5,6 versehen, wobei beispielhaft die Einmündungsöffnung 10 zum Saugrohr 4 im folgenden beschrieben wird. Die Einmündungsöffnung 10 ist durch eine erste Anlagefläche 11 und eine zweite Anlagefläche 12, die stegförmig ausgebildet ist, eingefaßt. Ein erster Abschnitt 14 des Saugrohres 4 erstreckt sich von dem Einlaß 7 bis zu der Einmündungsöffnung 10. Ein zweiter Abschnitt 15 des Saugrohres 4 erstreckt sich von der Einmündungsöffnung 10 bis zu dem Einlaßkanal 8. Bei verschlossener Einmündungsöffnung 10 strömt die Luft über den ersten und den zweiten Abschnitt 15 des Saugrohres 4 zu dem zugehörigen Zylinder. Die effektive Länge des Saugrohres 4 entspricht dann der Länge des Saugrohres 4. Bei niedrigen und mittleren Drehzahlen der Brennkraftmaschine läßt sich durch eine große effektive Länge der Saugrohre 3,4,5,6 bei Vollast eine verbesserte Befüllung der Zylinder mit Luft und damit eine Steigerung des Drehmoments erreichen. Bei hohen Drehzahlen und Vollast läßt sich die Befüllung der Zylinder mit Luft durch eine kurze effektive Länge der Saugrohre 3,4,5,6 erhöhen. Ist die Einmündungsöffnung 10 nicht verschlossen, so strömt ein Großteil der Luft vom Sammler 2 direkt durch die Einmündungsöffnung 10 durch den zweiten Abschnitt 15 des Saugrohres 4 zu dem zugehörigen Zylinder. Die effektive Länge der Saugrohre 3,4,5,6 entspricht dann nur der Länge des jeweiligen zweiten Abschnitts 15 der Saugrohre 3,4,5,6 , sie ist also für höhere Drehzahlen günstig.

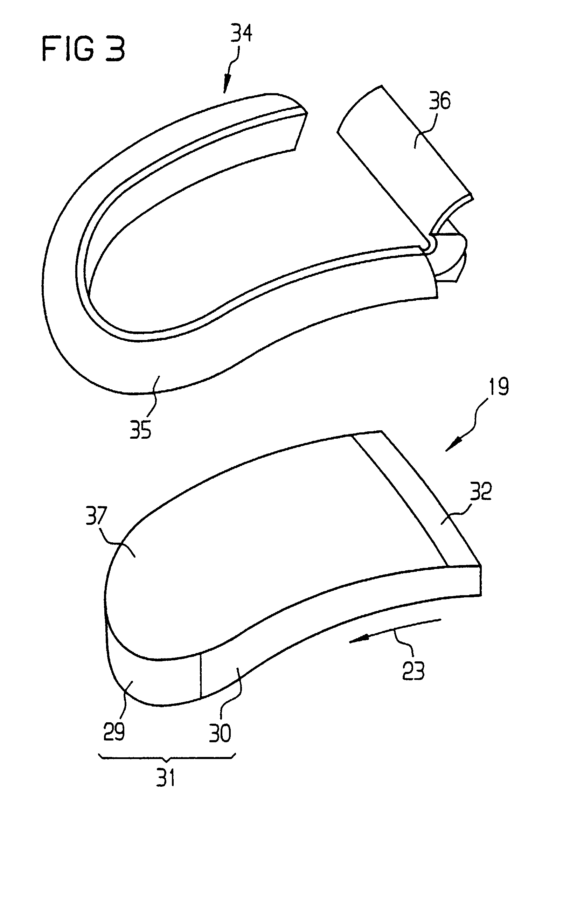

In dem Sammler 2 ist eine Schaltvorrichtung 16 (Figur 2) schwenkbar gelagert, die zylindersektorförmig ausgebildet ist. In einer ersten Drehlage verschließt sie die Einmündungsöffnungen 10 und in einer zweiten Drehlage gibt sie diese frei. Die Schaltvorrichtung 16 ist auf einer Mantelfläche 17 mit Erhebungen 18,19,20,21 versehen, die voneinander entsprechend dem Abstand der Einmündungsöffnungen 10 beabstandet sind. In Schließrichtung (mit einem Pfeil 23 bezeichnet) weist die Schaltvorrichtung 16 Luftführungsöffnungen 24,25, 26,27 auf, durch die in der zweiten Drehlage die Luft vom Sammler 2 direkt zu dem zweiten Abschnitt 15 der Saugrohre 3,4,5,6 strömt.

Eine hier nicht dargestellte Motorsteuerung eines Kraftfahrzeugs steuert in Abhängigkeit von der Drehzahl der Brennkraftmaschine und der Stellung der Drosselklappe einen Antrieb, der beispielsweise als pneumatische Druckdose ausgebildet ist, derart, daß die Schaltvorrichtung 16 je nach Drehzahl in die erste oder die zweite Drehlage verschwenkt wird.

Beispielhaft wird im folgenden die Erhebung 19 beschrieben. Aus Figur 2 ist ersichtlich, daß die Erhebungen 18,20,21 gleich ausgebildet sind. Figur 3 zeigt in einer Explosionsdarstellung die Erhebung 19, deren Umriß sich in der Schließrichtung 23 in Form einer Parabel verjüngt. Ihre Stirnseite 29 in Schließrichtung 23 und ihre daran angrenzenden Seitenwände 30 bilden eine erste Kontaktfläche 31. Der Endbereich der Erhebung 19, der der Stirnseite 29 gegenüberliegt, bildet eine zweite Kontaktfläche 32. Auf der ersten und der zweiten Kontaktfläche 32 wird eine Dichtung 34 angebracht, z. B. geklebt. Die Dichtung 34 weist entlang der ersten Kontaktfläche 31 eine Dichtlippe 35 auf, die einen axialen Versatz der Erhebung 19, der durch Fertigungsungenauigkeiten entstehen kann, kompensiert. Entlang der zweiten Kontaktfläche 32 weist die Dichtung 34 eine hahnenkammförmige Lasche 36 auf. Diese kommt in der ersten Drehlage mit der zweiten Anlagefläche 12 flächig dichtend zur Anlage.

Figur 4 zeigt die Schaltvorrichtung 16 in ihrer zweiten Drehlage. Die Luft strömt direkt vom Sammler 2 durch die Luftführungsöffnung 25 und die Einmündungsöffnung 10 in den zweiten Abschnitt 15 des Saugrohres 4. Die Erhebung 19 ist derart im Sammler 2 angeordnet, daß sie die Strömung nicht stört.

In Figur 5 ist die Schaltvorrichtung 16 in ihrer ersten Drehlage dargestellt. Die Erhebung 19 liegt mit ihren Kontaktflächen 31,32 über die Dichtung 34 dichtend an den Anlageflächen 11,12 der Einmündungsöffnung 10 an. Die Erhebung 19 ist günstigerweise derart ausgebildet, daß ihre Stirnseite 29 in der ersten Drehlage derart an den ersten Anlagefläche 11 anliegt, daß eine gekrümmte Plateaufläche 37 der Erhebung 19 im Bereich der Stirnseite 29 bündig mit der Saugrohrinnenwand abschließt. Dadurch wird die laminare Strömung im Saugrohr 4 nicht gestört.

Durch die parabelförmige Ausbildung der Erhebung 19 kommt in vorteilhafter Weise die Dichtung 34 nur in der ersten Drehlage mit der ersten Anlagefläche 11 zur Anlage. Somit ist die Dichtung 34 keinen starken Schubbelastungen ausgesetzt, wenn die Schaltvorrichtung 16 von der ersten Drehlage in die zweite Drehlage und umgekehrt verschwenkt wird. Ist die erste Kontaktfläche 31 als Formschrägen ausgebildet, so läßt sich die Schubbelastung der Dichtung 34 weiter erniedrigen und damit ihre Haltbarkeit erhöhen. Mit Formschrägen wird erste Kontaktfläche 31 bezeichnet, wenn sie derart schräg geneigt ausgebildet ist, daß die Grundfläche der Erhebung 19 größer ist als die Plateaufläche 37 der Erhebung 19.

Die Erhebung 19 kann ebenso rechteckförmig oder dreiecksförmig ausgebildet sein, falls die Einmündungsöffnung 10 eine entsprechende Kontour aufweist.

Durch die beschriebene Ausbildung der Erhebungen 18,19,20,21 der Schaltvorrichtung und der Einmündungsöffnungen 10 bleiben fertigungsbedingte Toleranzen, die insbesondere bei Schaltvorrichtungen nicht vermeidbar sind, die aus Kunststoff hergestellt sind, ohne Einfluß auf die Wirksamkeit des dichten Abschliessens der Einmündungsöffnungen 10 in der ersten Drehlage der Schaltvorrichtung 16.

## Patentansprüche

1. Luftansaugvorrichtung mit variabler Saugrohrlänge für eine Brennkraftmaschine
- mit einem Sammler (2), der zylinderförmig ausgebildet ist, an dessem Umfang Saugrohre (3,4,5,6) angeordnet sind und der Einmündungsöffnungen (10) zu den Saugrohren (3,4,5,6) aufweist, und
- mit einer Schaltvorrichtung (16), die zylindersektorförmig ausgebildet ist, die schwenkbar gelagert ist und die in einer ersten Drehlage die Einmündungsöffnungen (10) verschließt und in einer zweiten Drehlage diese öffnet,
**dadurch gekennzeichnet**,
- daß die Schaltvorrichtung (16) auf ihrer Mantelfläche Erhebungen (18,19,20,21) aufweist, deren Stirnseite (29) in Schließrichtung (23) zusammen mit ihren angrenzenden Seitenwänden (30) eine erste Kontaktfläche (31) bilden,
- daß die Erhebungen (18,19,20,21) in dem Endbereich, der der Stirnseite (29) gegenüberliegt, eine zweite Kontaktfläche (32) bilden,
- daß auf der ersten und zweiten Kontaktfläche (31,32) eine Dichtung (34) angeordnet ist, und
- daß jede Einmündungsöffnung (10) eine erste und eine zweite Anlagefläche (11,12) aufweist, die derart ausgebildet sind, daß in der ersten Drehlage an ihnen die erste bzw. zweite Kontaktfläche (31,32) formschlüssig anliegen.

2. Luftansaugvorrichtung nach Anspruch 1, dadurch gekennzeichnet, daß die Dichtung (34) im Bereich der ersten Kontaktfläche (31) mit einer Dichtlippe (35) versehen ist.

3. Luftansaugvorrichtung nach Anspruch 1, dadurch gekennzeichnet, daß die Dichtung (34) im Bereich der zweiten Kontaktfläche (32) eine Lasche (36) aufweist.

4. Luftansaugvorrichtung nach Anspruch 1, dadurch gekennzeichnet, daß sich die Erhebungen (18,19,20,21) in Schließrichtung (23) verjüngen.

5. Luftansaugvorrichtung nach Anspruch 4, dadurch gekennzeichnet, daß die Erhebungen (18,19,20,21) in Schließrichtung (23) einen parabelartigen Umriß aufweisen.

6. Luftansaugvorrichtung nach Anspruch 1, dadurch gekennzeichnet, daß die ersten Kontaktfläche (31) als Formschräge ausgebildet ist.

## Claims

1. Air-intake device having variable induction-pipe length for an internal combustion engine, comprising
- a collector (2) which is of cylindrical design and on the periphery of which induction pipes (3, 4, 5, 6) are arranged, and which has lead-in ports (10) to the induction pipes (3, 4, 5, 6), and
- a switching device (16) which is designed in the shape of a cylinder sector, is pivotably mounted, and closes the lead-in ports (10) in a first rotary position and opens them in a second rotary position,
characterized in that
- the switching device (16), on its lateral area, has prominences (18, 19, 20, 21), the front end (29) of which, in closing direction (23), forms together with its adjoining side walls (30) a first contact surface (31),
- the prominences (18, 19, 20, 21) form a second contact surface (32) in the end region which is located opposite the front end (29),
- a seal (34) is arranged on the first and second contact surfaces (31, 32), and
- each lead-in port (10) has a first and a second bearing surface (11, 12) which are designed in such a way that, in the first rotary position, the first and second contact surfaces (31, 32) respectively bear against them in a positive-locking manner.

2. Air-intake device according to Claim 1, characterized in that the seal (34) is provided with a sealing lip (35) in the region of the first contact surface (31).

3. Air-intake device according to Claim 1, characterized in that the seal (34) is provided with a bracket (36) in the region of the second contact surface (32).

4. Air-intake device according to Claim 1, characterized in that the prominences (18, 19, 20, 21) narrow in closing direction (23).

5. Air-intake device according to Claim 4, characterized in that the prominences (18, 19, 20, 21) have a parabolic outline in closing direction (23).

6. Air-intake device according to Claim 1, characterized in that the first contact surface (31) is designed as the draft of a mould.

## Revendications

1. Dispositif d'aspiration d'air comportant des longueurs variables des tubes d'aspiration d'air, destiné à un moteur à combustion interne,
- comportant un collecteur (2) de forme cylindrique, sur la périphérie duquel sont disposés des tubes d'aspiration (3, 4, 5, 6), et qui présente des orifices d'entrée (10) dans les tubes d'aspiration (3, 4, 5, 6), et
- comportant un dispositif d'inversion (16), en forme de secteur cylindrique, qui est monté pivotant et qui, dans une première position pivotée, ferme les orifices d'entrée (10), et, dans une deuxième position pivotée les ouvre,
caractérisé
- en ce que le dispositif d'inversion (16) présente, sur sa surface enveloppe, des surélévations (18, 19, 20, 21) dont la face en bout (29) dans le sens de fermeture (23), forme, avec ses parois latérales contiguës (30), une première surface de contact (31),
- en ce que les surélévations (18, 19, 20, 21) forment, dans la zone d'extrémité située à l'opposé de la face en bout (29), une deuxième surface de contact (32),
- en ce que, sur les première et deuxième surfaces de contact (31, 32), est disposé un joint d'étanchéité (34), et
- en ce que chaque orifice d'entrée (10) présente des première et deuxième surfaces d'appui (11, 12), réalisées de telle façon que, dans la première position pivotée, les première et deuxième surfaces de contact respectives (31, 32) reposent sur elles avec conjugaison de formes.

2. Dispositif d'aspiration d'air suivant la revendication 1, caractérisé en ce que le joint d'étanchéité (34) est muni d'une lèvre d'étanchéité (35) dans la zone de la première surface de contact (31).

3. Dispositif d'aspiration d'air suivant la revendication 1, caractérisé en ce que le joint d'étanchéité (34) présente une languette (36) dans la zone de la deuxième surface de contact (32).

4. Dispositif d'aspiration d'air suivant la revendication 1, caractérisé en ce que les surélévations (18, 19, 20, 21) vont en s'amincissant dans la direction de fermeture (23).

5. Dispositif d'aspiration d'air suivant la revendication 4, caractérisé en ce que les surélévations (18, 19, 20, 21) présentent, dans la direction de fermeture (23), un contour du genre parabolique.

6. Dispositif d'aspiration d'air suivant la revendication 1, caractérisé en ce que la première surface de contact (31) est réalisée sous la forme d'une contre-dépouille.
